# EUROPEAN PATENT SPECIFICATION

(11) **EP 2 541 872 B1**
(45) Date of publication and mention of the grant of the patent: **29.01.2014**
(21) Application number: 11290289.5
(22) Date of filing: 27.06.2011
(51) Int. Cl.: H04L 29/08

(54) **A rest capable web server**
REST-fähiger Webserver
Serveur Web capable de se reposer

(43) Date of publication of application: 02.01.2013
(73) Proprietor: Alcatel Lucent, 75007 Paris (FR)
(72) Inventor: Vermoessen, Luc, 2880 Bornem (BE); Liekens, Werner, 2860 Sint-Katelijne-Waver (BE)
(74) Representative: ALU Antw Patent Attorneys

(56) References cited:
- WO-A2-01/63874
- WO-A2-2008/087571

## Description

### Field of the Invention

The present invention generally relates to service gateways or sensor gateways, i.e. devices with processor and memory that can have a multitude of different end-user devices and/or sensors connected to them and that can run configurable software for those devices and/or sensors. Examples of end-user devices and/or sensors are accelerometers, body temperature sensors, blood pressure sensors, gluco devices, weight scales, etc. These devices typically connect to a service gateway or sensor gateway via wireline or wireless connections such as Ethernet, WiFi, Zigbee, Bluetooth, etc. The current invention in particular concerns software management of the service gateway or sensor gateway.

### Background of the Invention

A service gateway or sensor gateway is a device, typically located at the customer premises, that can have a multitude of end-user devices such as weight scales and/or en-user sensors such as body temperature sensors connected to it. In order to be able to connect the devices/sensors to the service gateway, a platform is provided for installable software bundles on the resource constrained service gateways.

Machine-to-machine or M2M communication is an application that enables remote access to the end-user devices' parameters. Via machine-to-machine or M2M communication, parameters of the service gateway and the end-user devices can be retrieved and manipulated remotely. As an example, a doctor or family member can log-in via a portal to monitor the blood pressure of a patient or relative from any place with network connectivity to the service gateway. In order to enable M2M, a Representational State Transfer or ReST interface is a possible and preferred option for parameter value retrieval of the end-user devices.

The end-user devices are connected to a service gateway and typically, a software bundle is installed for each end-user device on the service gateway. In order to support ReST on the service gateway, a ReSTful webserver software bundle is typically installed on the service gateway. This may be realized by providing a ReST web service that is tailored to the end-user devices connected to the service gateway or by providing a generic ReST web server where ReST resources can register themselves such that the ReST web server routes the ReST requests to the appropriate end-user devices.

The main problem with the existing solution of ReST web service or ReST web server is that the ReST capable framework must be learned. Thereupon, a ReST interface needs to be developed for each end-user device. In other words, a dedicated development is needed in order to implement ReST behaviour and protocol for the different manageable parameters of an end-user device via the ReST capable platform. This requires studying the used ReST capable web service or web server and how to interact with it in order to develop a ReST interface for the end-user device. Another disadvantage of the existing solutions is that the ReST web service is static in nature supporting the currently connected/installed end-user devices and the ReST web service needs to be upgraded or updated each time a new end-user device is connected to the service gateway.

Document WO 01/63874 of 30/08/2001 discloses a thin glue layers bridge between a non IP network and the Internet (IP).

It is an objective of the present invention to disclose a ReST capable software bundle that overcomes the above-identified shortcomings of existing solutions. More particularly, it is an objective of the present invention to provide a ReST capable software bundle that more optimally uses memory and processing resources of the service gateway, and reduces the time and complexity of end-user device software bundle development, in particular the development time for ReST interfaces, significantly. It is an additional objective of the present invention to improve the reliability and quality of software implementing ReSTful behaviour.

### Summary of the Invention

According to the present invention, the above defined objectives are realized by a Representational State Transfer or ReST capable web server as in claim 1 installable as a software bundle on a service gateway for end-user devices participating in machine-to-machine communication, as defined by claim 1, the ReST capable web server comprising:
- means adapted to retrieve and/or set a device identity;
- means adapted to retrieve and/or set one or more device parameters;
- means adapted to install event handling at a device; and
- a generic OSGi service interface, generic device group and generic device object for each device.

Indeed, the invention concerns a generic ReST web server with backend OSGi service interface. The generic ReST capable web server is implemented as a software bundle that can be installed on the service gateway. Also the generic device group and generic device object integrally form part of the service gateway and are part of the logic that provides automated mapping of a ReST request to the device bundle. The generic ReST web server contains a generic ReST framework that covers all aspects of ReST protocol handling as well as retrieval of a device identity and/or setting a runtime device identity, retrieving and/or setting a device parameter, e.g. as type, key, value tuple, etc., and installation of event handling at the device such that the end-user device can initiate events towards the generic ReST web server. The communication with the end-user devices in order to get and/or set parameter values or to notify events is done via generic OSGi service interfaces for each of the devices.

By providing one generic ReST capable web server with backend ReST OSGi service interface for event handling and getting/setting the parameters of end-user devices, memory and runtime processing resources are used optimally at the service gateway. Further, through implementing the generic ReST OSGi interface for backend functionality, the end-user device's software bundle can implement ReSTful behaviour without the developer having any ReST knowledge at all, reducing the development time and complexity significantly. In addition, thanks to the generic handling of ReSTful behaviour according to the present invention, software reliability and quality is improved.

Optionally, as defined by claim 2, the means adapted to retrieve and/or set a device identity, the means adapted to retrieve and/or set a device parameter, and the means adapted to install event handling at a device may comprise a software code generation tool adapted to generate said generic OSGi service interface for each device from an input XML file describing the device identity, the one or more device parameters and the event handling by this device.

Thus, the generic ReST capable web server according to the current invention may provide a code generation tool that takes as input an XML file describing the device identity, the different device parameters and the device's event handling in order to generate as output the generic ReST OSGi interface for the device under consideration. The generic ReST capable web server according to the current invention in other words provides proper formatting against defined XML schemes.

ReST interfaces are typically described in Web Application Description Language or WADL with type definitions in one or more XML Schema Documents or XSDs. The WADL and XSDs are used as input to generate the generic code that handles the ReST interactions with the M2M application. According to the present invention, an additional proprietary XML file hence may define the actual device resources such as the device's ID, parameters, alarms, etc. This additional proprietary XML file is then used to generate the appropriate ReST service interface code for the device.

### Brief Description of the Drawings

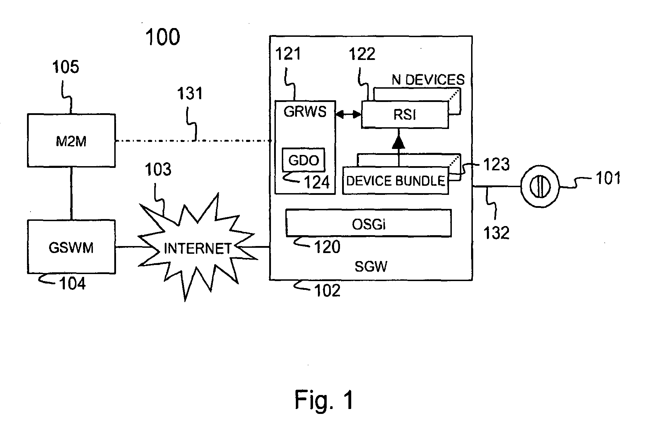

Fig. 1 illustrates an embodiment of the ReST capable web server bundle according to the present invention.

### Detailed Description of Embodiment(s)

Fig. 1 shows a system 100 wherein a machine-to-machine application, M2M or 105, interfaces via a gateway software management platform, GSWM or 104, and the Internet 103 with a generic ReST cable web server, GRWS or 121, installed on a service gateway, SGW or 102, with OSGi platform 120. Components 121, 122 and 123 are OSGi software bundles running on the OSGi platform 120, part of the service gateway 102. The generic ReST capable web server 121 according to the present invention handles the ReST M2M calls received from the remote M2M application 105 over a ReST web services connection 131. The ReST protocol handling is performed according to a WADL description. The generic ReST capable web server 121 further analyses the obtained URL in the request and routes the received request to the appropriate generic device object, 124. Therefore, the generic ReST capable web server 121 keeps track of the dynamic URL allocation for the different devices. The generic device object 124 provides mapping of the actual ReST request obtained from the generic ReST capable web server 121 to the generated backend ReST service interface 122 of the corresponding device 101. A generic device object or GDO is a software component that is part of the GRWS 121 and provides for translating the ReST request/reply together with the GRWS. The request is thus translated from ReST protocol to the OSGi interface as described in 122. Upon request receipt, component 123 will receive an OSGi interface call with request for parameters as described in the additional XML file about device ID, parameters and event handling. The generic device object 124 maps and formats the results obtained via the device's ReST service interface 122 into the appropriate format described in the WADL and XSD files, and forwards the reply back to the M2M application 105.

It is noticed that device bundle 123 implements the OSGi interface 122 and provides actual device ID, parameter data and event handling. Device bundle 123 therefore performs the translation of OSGi parameter requests as received from GRWS 121 through call on interface 122, to the actual device's interface. The device's interface is referenced 132 in Fig. 1 and this could be a Zigbee interface, a C software library interface, a Java interface, etc.

Below, a use case scenario in the domain of e-health is described. First, it is described in detail how via code generation, the above mentioned ReST service interfaces 122 are generated for the individual devices. These ReST service interfaces 122 are part of the framework implemented by the generic ReST web server 121 allowing extensibility without upgrading the generic ReST web server 121 itself. Thereafter, some XML type descriptions are give showing how the format could look like for this entire framework.

The following use case scenario is considered. Two gluco devices, named Glucodev_A (or 101 in Fig. 1) and GlucoDev_B here below, and two weight scales, named WeightScale_A and WeightScale_B here below, are connected to a service gateway 102 via connection(s) 132. An M2M application 105, that is connected via connection 132, is interested in obtaining the glucose percentage measured by Glucodev_A 101.

At startup of the service gateway 102 or at connection of a device while the service gateway 102 is already running, the generic ReST web server 121 listens via OSGi for device activity. For every detected device, a generic device object or GDO 124 is created and an appropriate generic device group or GDG is created. In the above described use case, the GRWS 121 will have two GDOs that represent the gluco devices and two GDOs that represent the weight scale devices. The GRWS 121 will further have two GDG objects that respectively group the gluco devices and the weight scales.

ReST invocation of the M2M application 105 for Glucodev_A 101 for parameter Gluco% starts with the M2M application 105 sending a GET message specifying the URL "http://SGW-IP@/eHealth/groups".

Upon receipt of the GET request, GRWS 121 queries the internal GDGs for their description and replies with a list of URLs specifying how the different groups can be reached, including name and description of each of the GDG objects. The result is formatted according to the WADL for this eHealth application. In pseudo XML notation:

```
 <Response>
 <Application name=eHealth>
     <Groups>
        <Group name=Gluco url="http://SGW-IP@/eHealth/g/0">
           <id id=0 Description="group of Gluco Devices />
        </Group>
        <Group name=WeihtScale url="http://SGW-IP@/eHealth/g/1">
           <id id=1 Description="group of WeightScale Devices />
        </Group>
     </Groups>
  </Application>
  </Response>
```

It is noticed that the GRWS 121 keeps track of the binding between internal GDGs and used URLs in de notation here above. It is noticed that no interaction is done with 122/123 at this moment in time. Data was obtained at registration time from device bundle 123.

The M2M application 105 matches the response with the intent for retrieving Gluco% of a gluco device and therefore selects the group with id=0.
The M2M application 105 thereupon invokes a GET message specifying the URL "http://SGW-IP@/eHealth/g/0/devices" in order to get a list of all devices as indicated by the WADL description.

Upon receipt of this GET message, the GRWS 121 analyses the URL, selects the appropriate internal GDG and forwards the URL to the GDG handling the Gluco Devices. The GDG returns a list of devices that form part of this group. The result is partly a list of URLs specifying how the different gluco devices can be reached, including name and description of each of the GDO objects. The result is formatted according to the WADL for this eHealth device. In pseudo XML notation:

### <Response>

```
  <Application name=eHealth>
     <Groups>
        <Group name=gluco id=0 url="http://SGW-IP@/eHealth/g/0">
           <Device name=glucoDevice id=0 url="http://SGW-IP@/eHealth/g/0/d/0"
           description="gluco device description Type A" />
           <Device name=glucoDevice id=1 url="http://SGW-IP@/eHealth/g/0/d/1"
           description="gluco device description Type B" />
        </Group>
     </Groups>
 </Application>
 </Response>
```

It is noticed that the GDC instance keeps track of binding of internal GDOs and used URLs in de notation here above.

The M2M application 105 matches the response and invokes each device for proper identification with the intent for matching a device against the initial intent of retrieving the Gluco% parameter value of gluco device glucoDev_A 101.

The M2M application 105 thereupon invokes a GET request for the ID of each of the obtained devices in order to learn the correct URL to invoke in order to reach a certain device. Therefore for the first device, the GET request specifying URL "http://SGW-IP@/eHealth/g/0/d/0/id", as indicated by the WADL description, shall be invoked.

The GRWS 121 analyses the URL in the GET request and forwards the URL to the GDG with id=0. This GDG forwards the URL to the GDO 124 with id=0. The GDO object 124 returns the result formatted against the WADL description. The GDO invokes the ReST service interface RSI 122 (implemented as a regular OSGi service interface) of the corresponding gluco device to obtain specifics of the identification, such as the model, type, manufacturer, etc. The GDO can decide to cache this information for performance reasons. In pseudo XML notation, the response is as follows:

```
 <Response>
  <Application>
     <Groups>
        <Group name=gluco id=0 url="http://SGW-IP@/eHealth/g/0">
           <Device name=glucoDevice id=0 url="http://SGW-IP@/eHealth/g/0/d/0"
           description="gluco device description Type A" />
              <Id manufacturer="Mf" Model="PerfectWeight" type"M32" />
        </Group>
     </Groups>
 </Application>
 </Response>
```

The M2M application 105 matches this response and invokes a request to learn the parameters of the device and the URL that is needed to retrieve a parameters value. The M2M application 105 thus invokes a get request GET "http://SGW-IP@/eHealth/g/0/d/0/params", as is indicated by the WADL description.

Upon receipt of this request, the GRWS 121 analyses the URL and forwards the URL to the GDG with id=0. The GDG forwards the URL to the GDO 124 with id=0. As a result, the GDO object 124 returns a list of parameters formatted against the WADL description. In pseudo XML notation, the response is as follows:

```
 <Response>
 <Application>
     <Groups>
        <Group name=gluco id=0 url="http://SGW-IP@/eHealth/g/0">
           <Device name=glucoDevice id=0 url="http://SGW-IP@/eHealth/g/0/d/0"
           description="gluco device description Type A" />
              <Params>
                 <Param id=0 name=gluco% description="describe"
                 valuetype="type" unity="%"
                 url="http://SGW-IP@/eHealth/g/0/d/0/p/0>
                 <Param id=1 name=xxx description="xxxdescribe"
                 valuetype="xxxtype" unity="xxx"
                 url="http://SGW-IP@/eHealth/g/0/d/0/p/1 >
              </Params>
           </Device>
        </Group>
     </Groups>
 </Application>
 </Response>
```

Optionally, the GDO 124 invokes the OSGi RSI interface 122 of the corresponding gluco device 101 in order to obtain a list of parameters that can be queried. The GDO can decide to cache this information for performance reasons.

The M2M application 105 matches the response and invokes the request to learn that the Gluco% parameter is needed to retrieve the wanted parameter value. The M2M application 105 thereto invokes a get request GET "http://SGW-IP@/eHealth/g/0/d/0/p/0", as is indicated by the WADL description.

Upon receipt of this request, the GRWS 121 analyses the URL and forwards the URL to the GDG with id=0. The GDG forwards the URL to the GDO with id=0. As a result, the appropriate GDO invokes the OSGi service interface RSI 122 for the value of the Gluco% parameter via a call, e.g. String GetParameter("Gluco%"). The GDO returns a result obtained from OSGi service 123, and formats according to WADL, XSD. In pseudo XML notation, the response is as follows:

```
 <Response>
  <Application>
     <Groups>
        <Group name=gluco id=0 url="http://SGW-IP@/eHealth/g/0">
           <Device name=glucoDevice id=0 url="htp://SGW-IP@/eHealth/g/0/d/0"
           description="gluco device description Type A" />
              <Params>
                 <Param id=0 name=gluco% value="65" />
              </Params>
           </Device>
        </Group>
     </Groups>
  </Application>
  </Response>
```

Below, an example XML definition is given for a device identity information:

```
<xs:element name="BasicDeviceInformation" type="BasicDeviceInformation"/>
 <xs:complexType name="BasicDeviceInformation">
  <xs:sequence>
     <xs:element name="applmageDownloadTimestamp" type="xs:unsignedInt"
     minOccurs="0" maxOccurs="1"/>
     <xs:element name="fwlmageDownloadTimestamp" type="xs:unsignedInt"
     minOccurs="0" maxOccurs="1"/>
     <xs:element name="ID" type="xs:string" minOccurs="0" maxOccurs="1"/>
     <xs:element name="mfgApplicatonVersion" type="xs:string" minOccurs="0"
     maxOccurs="1"/>
     <xs:element name="mfgDate" type="xs:date" minOccurs="0" maxOccurs="1"/>
     <xs:element name="mfgHardwareVersion" type="xs:string" minOccurs="0"
     maxOccurs="1"/>
     <xs:element name="mfgInfo" type="xs:string" minOccurs="0" maxOccurs="1"/>
     <xs:element name="mfgModeIID" type="xs:string" minOccurs="0"
     maxOccurs="1"/>
     <xs:element name="mfgName" type="xs:string" minOccurs="0"
     maxOccurs="1 "/>
     <xs:element name="primaryPower" type="xs:string" minOccurs="0"
     maxOccurs="1"/>
     <xs:element name="schemaVersion" type="xs:string" minOccurs="0"
     maxOccurs="1"/>
     <xs:element name="secondaryPower" type="xs:boolean" minOccurs="0"
     maxOccurs="1"/>
     <xs:element name="stackVersion" type="xs:string" minOccurs="0"
     maxOccurs="1 "/>
  </xs:sequence>
  <xs:attribute name="href" use="optional" type="xs:anyURI"/>
  </xs:complexType>
```

Below, an example XML definition is given for a device parameter information, e.g. the network parameters :

```
 <xs:element name="NetworkParameters" type="NetworkParameters"/>
 <xs:complexType name="NetworkParameters">
  <xs:sequence>
     <xs:element name="channelMask" type="xs:string" minOccurs="0"
     maxOccurs="1"/>
     <xs:element name="extendedPANID" type="xs:string" minOccurs="0"
     maxOccurs="1"/>
     <xs:element name="ID" type="xs:string" minOccurs="0"
     maxOccurs="1"/>
     <xs:element name="PANID" type="xs:string" minOccurs="0"
     maxOccurs="1"/>
     <xs:element name="protocolVersion" type="xs:string" minOccurs="0"
     maxOccurs="1"/>
     <xs:element name="shortAddress" type="xs:string" minOccurs="0"
     maxOccurs="1"/>
     <xs:element name="stackProfile" type="xs:string" minOccurs="0"
     maxOccurs="1"/>
     <xs:element name="startupControl" type="xs:string" minOccurs="0"
     maxOccurs="1"/>
  </xs:sequence>
  </xs:complexType>
```

Below, an example XML definition is given for a device event information:

```
 <xs:element name="Alarm" type="Alarm"/>
 <xs:complexType name="Alarm">
  <xs:sequence>
     <xs:element name="alarmCode" type="xs:string" minOccurs="0"
     maxOccurs="1"/>
     <xs:element name="enabled" type="xs:boolean" minOccurs="0"
     maxOccurs="1"/>
     <xs:element name="ID" type="xs:string" minOccurs="0"
     maxOccurs="1"/>
     <xs:element name="name" type="xs:string" minOccurs="O"
     maxOccurs="1"/>
  </xs:sequence>
  </xs:complexType>
```

Although the present invention has been illustrated by reference to a specific embodiment, it will be apparent to those skilled in the art that the invention is not limited to the details of the foregoing illustrative embodiments, and that the present invention may be embodied with various changes and modifications without departing from the scope thereof. The above described embodiment is therefore to be considered in all respects as illustrative and not restrictive, the scope of the invention being defined by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, different from the one(s) described or illustrated above.

## Claims

1. A Representational State Transfer or ReST capable web server (121) installable as a software bundle on a service gateway (102) for end-user devices (101) participating in machine-to-machine communication, said ReST capable web server (121) comprising:
- means adapted to retrieve and/or set a device identity;
- means adapted to retrieve and/or set one or more device parameters;
- means adapted to install event handling at a device; and
- a generic OSGi service interface (122), generic device group and generic device object (124) for each device.

2. A ReST capable web server (121) according to claim 1, wherein said means adapted to retrieve and/or set a device identity, said means adapted to retrieve and/or set a device parameter, and said means adapted to install event handling at a device comprise a software code generation tool adapted to generate said generic OSGi service interface (122) for said device from an input XML file describing said device identity, said one or more device parameters and said event handling by said device.

## Patentansprüche

1. Representational State Transfer- bzw. REST-fähiger Webserver (121), welcher als Software-Bündel auf einem Dienst-Gateway (102) für Endbenutzervorrichtungen (101), die an einer Maschine-zu-Maschine-Kommunikation beteiligt sind, installierbar ist, wobei der besagte REST-fähige Webserver (121) umfasst:
- Mittel, die für das Abrufen und/oder Einstellen einer Vorrichtungsidentität ausgelegt sind;
- Mittel, die für das Abrufen und/oder Einstellen eines oder mehrerer Vorrichtungsparameter ausgelegt sind;
- Mittel, die für das Installieren einer Ereignishandhabung an einer Vorrichtung ausgelegt sind; und
- eine generische OSGi-Dienst-Schnittstelle, (122) eine generische Vorrichtungsgruppe und ein generisches Vorrichtungsobjekt (124) für jede Vorrichtung.

2. REST-fähiger Webserver (121) nach Anspruch 1, wobei die besagten Mittel, die für das Abrufen und/oder Einstellen einer Vorrichtungsidentität ausgelegt sind, die besagten Mittel, die für das Abrufen und/oder Einstellen eines oder mehrerer Vorrichtungsparameter ausgelegt sind, und die besagten Mittel, die für das Installieren einer Ereignishandhabung an einer Vorrichtung ausgelegt sind, ein Software-Code-Erzeugungs-Tool umfassen, welches für das Erzeugen der besagten generischen OSGi-Dienst-Schnittstelle (122) für die besagte Vorrichtung ausgehend von einer eingegebenen XML-Datei, welche die besagte Vorrichtungsidentität beschreibt, des besagten einen oder der besagten mehreren Vorrichtungsparameter und der besagten Ereignishandhabung durch die besagte Vorrichtung ausgelegt ist.

## Revendications

1. Serveur web (121) ayant une aptitude ReST (Representational state transfer - Transfert d'état représentatif), pouvant être installé en tant que suite logicielle sur une passerelle de service (102) pour des périphériques d'utilisateur final (101) participant à une communication de machine à machine, ledit serveur web (121) ayant une aptitude ReST comprenant :
- des moyens adaptés pour récupérer et/ou définir une identité de périphérique ;
- des moyens adaptés pour récupérer et/ou définir un ou plusieurs paramètres de périphérique ;
- des moyens adaptés pour installer la gestion d'événements sur un périphérique ; et
- une interface de service OSGi générique (122), un groupe de périphérique générique et un objet de périphérique générique (124) pour chaque périphérique.

2. Serveur web (121) ayant une aptitude ReST selon la revendication 1, avec lequel lesdits moyens adaptés pour récupérer et/ou définir une identité de périphérique, lesdits moyens adaptés pour récupérer et/ou définir un paramètre de périphérique et lesdits moyens adaptés pour installer la gestion d'événements sur un périphérique comprennent un outil de génération de code logiciel adapté pour générer ladite interface de service OSGi générique (122) pour ledit périphérique à partir d'un fichier XML d'entrée décrivant ladite identité de périphérique, lesdits un ou plusieurs paramètres et ladite gestion d'événements par ledit périphérique.
